(19) Europäisches Patentamt
European Patent Office
Office européen des brevets

(11) **EP 4 468 022 A1**

(12) **DEMANDE DE BREVET EUROPEEN**

(43) Date de publication:
**27.11.2024 Bulletin 2024/48**

(21) Numéro de dépôt: **23305815.5**

(22) Date de dépôt: **23.05.2023**

(51) Classification Internationale des Brevets (IPC):
**G01S 7/02** *(2006.01)* **G01S 11/10** *(2006.01)*
**G01S 11/14** *(2006.01)*

(52) Classification Coopérative des Brevets (CPC):
**G01S 7/021; G01S 11/10; G01S 11/14**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(71) Demandeur: **BULL SAS**
**78340 Les Clayes-Sous-Bois (FR)**

(72) Inventeur: **BUSI, Jean-Daniel**
**13127 Vitrolles (FR)**

(74) Mandataire: **IPAZ**
**Bâtiment Platon**
**Parc Les Algorithmes**
**91190 Saint-Aubin (FR)**

(54) **PROCÉDÉ, PROGRAMME D'ORDINATEUR ET DISPOSITIF DE CARACTÉRISATION D'UN ÉMETTEUR IMPULSIONNEL**

(57) L'invention concerne un procédé (200) de caractérisation d'un émetteur de signal impulsionnel, ledit procédé (200) comprenant les étapes suivantes :
- réception (202), par un récepteur, du signal impulsionnel (100) émis par ledit émetteur,
- calcul (206) d'une variation de fréquence causée par effet Doppler pour une première grandeur périodique dans ledit signal impulsionnel, et
- détermination (208-210) de la vitesse radiale relative dudit émetteur par rapport audit récepteur, en fonction de ladite variation de fréquence pour ladite première grandeur périodique ;
caractérisé en ce que ladite première grandeur périodique est choisie parmi les grandeurs suivantes :
- une fréquence de répétition d'impulsions, ou
- une fréquence de répétition de motifs d'émission (106), chaque motif d'émission (106) comprenant un nombre fixe de plusieurs impulsions (102)

Elle concerne également un programme d'ordinateur, un dispositif et un récepteur mettant en oeuvre un tel procédé.

EP 4 468 022 A1

```
                    ┌────────────────────────────────────┐
                    │   Ecoute du signal impulsionnel     │──202
                    └────────────────────────────────────┘
                                    │
                    ┌────────────────────────────────────┐
                    │ Calcul de valeur de la fréquence de │
                    │ répétition des impulsions FI, ou de │──204
                    │ la fréquence de répétition des      │
                    │ motifs FM                           │
                    └────────────────────────────────────┘
                                    │
                    ┌────────────────────────────────────┐
                    │ Calcul d'une variation de fréquence │──206
                    │ due à l'effet Doppler               │
                    └────────────────────────────────────┘
                                    │
                    ┌────────────────────────────────────┐
                    │ Calcul d'une vitesse radiale        │──208
                    │ relative de l'émetteur impulsionnel │
                    └────────────────────────────────────┘
                                    │
                    ┌ ─ ─ ─ ─ ─ ─ ─ ─ ─ ─ ─ ─ ─ ─ ─ ─ ─ ┐
                      Calcul d'une vitesse radiale pour   │──210
                    │ l'émetteur impulsionnel
                    └ ─ ─ ─ ─ ─ ─ ─ ─ ─ ─ ─ ─ ─ ─ ─ ─ ─ ┘
                                    │
                    ┌ ─ ─ ─ ─ ─ ─ ─ ─ ─ ─ ─ ─ ─ ─ ─ ─ ─ ┐
                      Calcul d'une position pour          │──212
                    │ l'émetteur impulsionnel
                    └ ─ ─ ─ ─ ─ ─ ─ ─ ─ ─ ─ ─ ─ ─ ─ ─ ─ ┘
        200
```

**FIG. 2**

## Description

La présente invention concerne un procédé de caractérisation d'un d'émetteur de signal impulsionnel, et en particulier en vue de déterminer sa vitesse radiale relative et éventuellement sa position. Elle concerne également un programme d'ordinateur, un dispositif et un récepteur de signal impulsionnel mettant en oeuvre un tel procédé.

Le domaine de l'invention est de manière générale le domaine de la caractérisation d'émetteurs de signaux impulsionnels, tels que des radars, des sonars, des émetteurs de radiocommunication, etc.

## État de la technique

La détection d'un émetteur de signal impulsionnel, également appelé émetteur impulsionnel ou émetteur dans la suite, peut être réalisé en utilisant le principe Doppler. Chaque impulsion est obtenue par une porteuse d'une fréquence donnée. Le signal impulsionnel, et en particulier l'impulsion, émis(e) par l'émetteur, est reçu par un récepteur. La fréquence de la porteuse utilisée pour générer l'impulsion est calculée par analyse du signal impulsionnel reçu. La variation dans le temps de la fréquence de la porteuse témoigne de la vitesse radiale relative entre l'émetteur et le récepteur. Ainsi, en déterminant la variation de la fréquence de la porteuse, il est possible de calculer la vitesse radiale de l'émetteur impulsionnel par rapport au récepteur. Lorsque le récepteur est fixe, alors la vitesse radiale relative correspond à la vitesse radiale de déplacement de l'émetteur.

Cette solution connue, basée sur le principe Doppler, est efficace dans la plupart des cas. Mais, il existe des situations où elle ne peut pas être utilisée avec précision. Par exemple, la solution actuelle ne peut pas être utilisée sur des impulsions courtes, en particulier de type radars ou sonars : en effet, dans ce cas, la fréquence de la porteuse ne peut pas être détectée et calculée avec suffisamment de précision et ne permet donc pas de déterminer avec précision la vitesse radiale relative de l'émetteur. Suivant un autre exemple, la solution actuelle ne peut pas être utilisée sur des impulsions modulées dont la caractéristique de modulation n'est pas connue : en effet, sans connaitre la caractéristique de modulation, il est difficile de déterminer la fréquence de la porteuse du signal impulsionnel, et donc sa variation dans le temps.

Un but de la présente invention est de remédier à au moins un des inconvénients de l'état de la technique.

Un autre but de l'invention est de proposer une solution de caractérisation d'un émetteur de signal impulsionnel de manière plus précise et pouvant être utilisée pour une plus grande variété de signaux impulsionnels.

## Exposé de l'invention

L'invention propose d'atteindre au moins l'un des buts précités par un procédé de caractérisation d'un émetteur de signal impulsionnel, ledit procédé comprenant les étapes suivantes :

- réception, par un récepteur, du signal impulsionnel émis par ledit émetteur,
- calcul d'une variation de fréquence due à l'effet Doppler pour une première grandeur périodique dans ledit signal impulsionnel reçu, et
- détermination de la vitesse radiale relative dudit émetteur par rapport audit récepteur, en fonction de ladite variation de fréquence de ladite première grandeur périodique ;

caractérisé en ce que ladite première grandeur périodique est choisie parmi les grandeurs suivantes :

- une fréquence de répétition d'impulsions, ou
- une fréquence de répétition de motifs d'émission, chaque motif d'émission comprenant un nombre fixe de plusieurs impulsions.

Ainsi, de manière connue, l'invention propose de caractériser un émetteur impulsionnel, et en particulier de déterminer sa vitesse radiale relative, en utilisant la variation de fréquence due à l'effet Doppler.

De manière innovante, et à la différence des techniques actuelles qui utilisent la variation de la fréquence de la porteuse utilisée pour générer les impulsions, l'invention propose d'utiliser la variation de la fréquence de répétition d'impulsions, ou de la fréquence de répétition de motifs d'impulsions, dans le signal impulsionnel reçu.

La fréquence de répétition des impulsions, ou la fréquence de répétition des motifs d'impulsions, peut être déterminée même lorsque chaque impulsion a une durée très courte. Ainsi, en utilisant la fréquence de répétition des impulsions, ou la fréquence de répétition des motifs d'impulsions, il est possible de réaliser une caractérisation d'un émetteur impulsionnel émettant des impulsions de courte durée.

De plus, la fréquence de répétition des impulsions, ou la fréquence de répétition des motifs d'impulsions, peut être déterminée indépendamment de la caractéristique de modulation des impulsions. Ainsi, en utilisant la fréquence de répétition des impulsions, ou la fréquence de répétition des motifs d'impulsions, il est possible de réaliser une caractérisation d'un émetteur impulsionnel sans connaitre la caractéristique de modulation des impulsions, dans le cas où les impulsions sont modulées.

Par conséquent, comparée à la solution de l'état de la technique, l'invention permet de caractériser un émetteur impulsionnel, et en particulier de déterminer sa vitesse radiale relative, de manière plus précise et plus simple, et ce pour une plus grande variété d'émetteurs impulsionnels.

Dans le présent document, on entend par « impulsion courte » une impulsion dont la durée est inférieure ou égale à 1 ms.

Dans le présent document, on entend par « signal impulsionnel », un signal comprenant plusieurs impulsions, chaque impulsion pouvant également être appelée « émission ». Le signal impulsionnel peut comprendre une répétition de plusieurs motifs d'émissions, chaque motif correspondant, ou étant formé par, une séquence fixe de plusieurs impulsions.

Dans le présent document on entend par « impulsion » un changement rapide et transitoire de l'amplitude d'un signal d'une valeur de base à une valeur supérieure ou inférieure, suivi d'un retour rapide à la valeur de base. Suivant des exemples de réalisation, une impulsion peut être :

- une impulsion individuelle, tel qu'une impulsion radar ou sonar, ou
- un burst, également appelé une salve : dans ce cas, chaque burst émis est considéré et traité comme étant une impulsion, sans se soucier des données, ou des informations, contenues dans ledit burst.

De manière classique, une impulsion peut être obtenue par modification de l'amplitude d'un signal de base, appelé porteuse, d'une fréquence donnée, appelée fréquence de porteuse.

Suivant des modes de réalisation, la caractérisation de l'émetteur peut être réalisée uniquement en fonction de la variation de la fréquence de la première grandeur périodique.

Dans ce cas, la seule grandeur périodique utilisée pour caractériser l'émetteur impulsionnel, et en particulier pour déterminer sa vitesse radiale relative, est la fréquence de répétition des impulsions, ou la fréquence de répétition des motifs d'impulsions. Aucune autre grandeur périodique n'est utilisée.

Suivant des modes de réalisation, l'invention peut utiliser une ou plusieurs autres grandeurs périodiques, en plus de la première grandeur périodique, pour caractériser l'émetteur impulsionnel.

Dans ce cas :

- l'étape de calcul peut réaliser un calcul d'une variation de fréquence due à l'effet Doppler, pour au moins une deuxième grandeur périodique dans le signal impulsionnel, et
- la vitesse radiale relative de l'émetteur par rapport audit récepteur peut être déterminée en fonction :

  ▪ de la variation de fréquence de ladite première grandeur périodique, et
  ▪ de la variation de fréquence de ladite au moins une deuxième grandeur périodique.

L'utilisation de plusieurs grandeurs périodiques permet de caractériser l'émetteur, et en particulier de déterminer sa vitesse radiale relative, de manière plus précise. En effet, l'utilisation de plusieurs grandeurs permet de s'assurer que la caractérisation est correcte, d'utiliser la mesure réalisée avec chacune des grandeurs périodiques pour confirmer, ou corriger, la mesure réalisé avec l'autre ou les autres grandeurs périodiques.

u moins une deuxième grandeur périodique peut être choisie parmi les grandeurs suivantes :

- la fréquence de répétition d'impulsions, lorsque la première grandeur périodique est la fréquence de répétition de motifs d'émission,
- la fréquence de répétition de motifs d'émission, lorsque la première grandeur est la fréquence de répétition d'impulsions,
- une fréquence d'une porteuse utilisée pour générer chaque impulsion.

Bien entendu, l'invention n'est pas limitée aux grandeurs périodiques listées plus haut. Au moins une autre grandeur périodique que celles indiquées plus hauts peut être utilisée, à la place ou en combinaison avec au moins une desdites grandeurs périodiques.

Dans le cas où l'invention utilise uniquement la première grandeur périodique, alors la vitesse radiale relative de l'émetteur est celle calculée en fonction de la variation de fréquence de ladite première grandeur périodique.

Dans le cas où l'invention utilise plusieurs grandeurs périodiques, à savoir la première grandeur périodique et au moins une deuxième grandeur périodique, l'étape de détermination de la vitesse radiale relative peut comprendre les étapes suivantes :

- calcul d'une vitesse radiale relative, dite individuelle, en fonction de la variation de fréquence de chacune des première et deuxième(s) grandeurs périodiques ; et
- fourniture de la vitesse radiale de l'émetteur en fonction desdites vitesses radiales relatives individuelles.

Autrement dit, une vitesse radiale relative est déterminée avec la première grandeur périodique et avec chaque deuxième grandeur périodique, considérées individuellement, en utilisant la variation de fréquence calculée pour ladite grandeur périodique. Ensuite, la vitesse radiale relative de l'émetteur impulsionnel peut être déterminée en fonction desdites vitesses radiales relatives calculées.

Lorsque les vitesses radiales relatives obtenues avec toutes les grandeurs périodiques sont trop différentes les unes des autres, cela peut signaler une erreur de mesure de sorte qu'il peut être préférable de ne pas utiliser ces vitesses pour obtenir la vitesse radiale relative de l'émetteur impulsionnel.

Lorsque la vitesse radiale relative individuelle obtenue avec une des grandeurs périodiques est trop différente de celle(s) obtenue(s) avec d'autre(s) grandeur(s) périodique(s), ladite vitesse radiale relative individuelle peut ne pas être utilisée dans le calcul de la vitesse radiale relative de l'émetteur et être éliminée.

Pour au moins une grandeur périodique, la vitesse radiale relative peut être calculée en utilisant la relation suivante :

$$V_r = \Delta f . c / f$$

avec $V_r$ la vitesse radiale relative de l'émetteur impulsionnel, $f$ la fréquence de la grandeur périodique, $\Delta f$ la variation de la fréquence $f$ due à l'effet Doppler et c la célérité.

Suivant des modes de réalisation, la vitesse radiale relative de l'émetteur peut être fournie par un filtre de Kalman prenant en entrée les vitesse radiales relatives individuelles obtenues avec les grandeurs périodiques.

L'utilisation d'un filtre de Kalman permet de fournir un résultat précis à partir de mesures bruitées.

Bien entendu, la vitesse radiale relative retenue pour l'émetteur peut être calculée selon d'autres techniques. Suivant d'autres modes de réalisation, la vitesse radiale relative retenue pour l'émetteur peut être calculée suivant une relation mathématique prenant en entrée les vitesses radiales relatives individuelles calculées avec les grandeurs périodiques. Suivant un exemple de réalisation, la vitesse radiale relative retenue pour l'émetteur impulsionnel peut être calculée comme étant une moyenne des vitesses radiales relatives individuelles calculées avec les grandeurs périodiques.

Suivant d'autres modes de réalisation, le procédé selon l'invention peut en outre comprendre une étape de détermination d'une vitesse radiale absolue de l'émetteur impulsionnel, à partir de la vitesse radiale relative.

Lorsque le récepteur est immobile, la vitesse radiale relative mesurée correspond à la vitesse radiale absolue de l'émetteur impulsionnel.

Lorsque le récepteur est mobile, dans ce cas, la vitesse radiale absolue de l'émetteur est calculée en fonction de la vitesse radiale relative mesurée et la vitesse radiale du récepteur.

Avantageusement, le procédé selon l'invention peut en outre comprendre une étape de détermination d'une position de l'émetteur impulsionnel en fonction de la vitesse radiale relative.

La position calculée peut être une position relative, telle que par exemple une distance entre l'émetteur impulsionnel et le récepteur.

La position calculée peut être une position géographique. Dans ce cas, le calcul de la position géographique de l'émetteur impulsionnel prend en compte la position du récepteur, qui, elle, est connue.

Suivant des modes de réalisation, le signal impulsionnel peut être un signal radar émis par un radar. Dans ce cas, l'invention est mise en oeuvre pour caractériser ledit radar, et en particulier pour déterminer sa vitesse radiale, et optionnellement sa position.

Suivant des modes de réalisation, le signal impulsionnel peut être un signal sonar émis par un sonar. Dans ce cas, l'invention est mise en oeuvre pour caractériser ledit sonar, et en particulier pour déterminer sa vitesse radiale, et optionnellement sa position.

Suivant des modes de réalisation, le signal impulsionnel peut être une salve, (« burst » en anglais), émise par un émetteur radiofréquence. Dans ce cas, l'invention est mise en oeuvre pour caractériser ledit d'émetteur radiofréquence, et en particulier pour déterminer sa vitesse radiale, et optionnellement sa position.

Selon un autre aspect de l'invention, il est proposé un programme d'ordinateur comprenant des instructions exécutables qui, lorsqu'elles sont exécutées par un appareil informatique, mettent en oeuvre toutes les étapes du procédé, selon l'invention.

Le programme d'ordinateur peut être en tout langage informatique, tel que par exemple en langage machine, en C, C++, JAVA, Python, etc.

Le programme d'ordinateur peut être mémorisé sur tout type de support.

Selon un autre aspect de l'invention, il est proposé un dispositif de caractérisation d'un émetteur de signal impulsionnel, comprenant des moyens configurés pour mettre en oeuvre le procédé selon l'invention.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

Selon un autre aspect de l'invention, il est proposé un récepteur de signaux impulsionnels comprenant :

- au moins une antenne de réception, pour recevoir le signal impulsionnel émis par un émetteur impulsionnel ; et
- un dispositif selon l'invention.

Le récepteur peut être un récepteur fixe ou un récepteur embarqué sur un véhicule, et en particulier sur un aéronef ou un bateau ou encore un sous-marin.

Le récepteur peut comprendre une unique antenne, ou plusieurs antennes formant un réseau antennaire.

**Description des figures et modes de réalisation**

D'autres avantages et caractéristiques apparaîtront à l'examen de la description détaillée de modes de réalisation nullement limitatifs, et des dessins annexés sur lesquels :

- la FIGURE 1 est une représentation schématique d'un exemple de réalisation non limitatif d'un signal impulsionnel pouvant être émis par un émetteur impulsionnel ;
- la FIGURE 2 est une représentation schématique d'un exemple de réalisation non limitatif d'un procédé selon l'invention ;
- la FIGURE 3 est une représentation schématique d'un autre exemple de réalisation non limitatif d'un procédé selon l'invention ;
- la FIGURE 4 est une représentation schématique d'un exemple de réalisation non limitatif d'un dispositif selon l'invention ; et
- la FIGURE 5 est une représentation schématique d'un exemple de réalisation non limitatif d'un récepteur selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

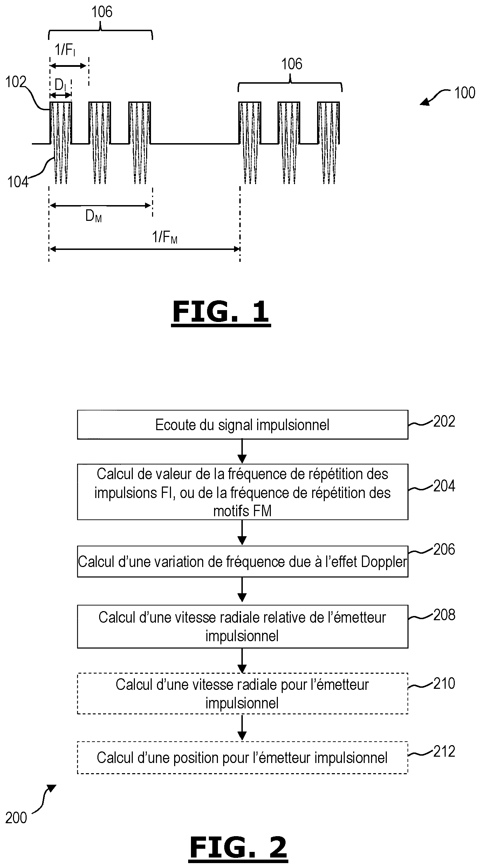

La FIGURE 1 est une représentation schématique d'un exemple de réalisation non limitatif d'un signal impulsionnel pouvant être émis par un émetteur impulsionnel.

Le signal 100 de la FIGURE 1 peut être un signal radar, un signal sonar, un signal radiofréquence.

Le signal 100 comprend une pluralité d'impulsions 102. Chaque impulsion est obtenue avec une porteuse 104 d'une fréquence donnée, dite fréquence porteuse, et notée FP dans la suite.

Chaque impulsion a une durée d'impulsion, notée DI.

Dans le signal impulsionnel 100, les impulsions sont répétées à une fréquence, appelée fréquence d'impulsions, et notée FI dans la suite.

Dans l'exemple non limitatif représenté sur la FIGURE 1, les impulsions 102 sont des impulsions carrées. Bien entendu, l'invention n'est pas limitée à cette forme d'impulsions, et les impulsions peuvent être de forme carrée, triangulaire, etc.

Dans l'exemple non limitatif représenté sur la FIGURE 1, la porteuse est un signal sinusoïdal. Bien entendu, l'invention n'est pas limitée à cette forme de porteuse, et la porteuse peut être carrée, triangulaire, etc.

De manière optionnelle, le signal impulsionnel 100 peut comprendre des motifs d'émissions 106. Chaque motif 106 comprend plusieurs impulsions 102.

De préférence, tous les motifs 106 comprennent un même nombre d'impulsions. Bien entendu, au moins deux motifs peuvent comprendre un nombre différent d'impulsions.

Chaque motif 104 a une durée de motif, notée DM.

Les motifs 106 sont répétées à une fréquence de répétition, appelée fréquence de motifs, et notée FM dans la suite. De préférence, tous les motifs 106 ont une même durée à l'émission. Bien entendu, au moins deux motifs peuvent avoir des durées de motif différentes.

Dans l'exemple non limitatif représenté sur la FIGURE 1, chaque motif 106 comprend trois impulsions 102. Chaque impulsion à une même durée.

Suivant un mode de réalisation, la présente invention propose caractériser l'émetteur impulsionnel ayant émis le signal impulsionnel 100 en utilisant une première grandeur périodique qui est :

- la fréquence FI de répétition des impulsions 102: cette fréquence FI peut être déterminée en écoutant le signal impulsionnel 100 sur une durée suffisante, par exemple sur une durée supérieure à 2xDI ; ou
- la fréquence FM de répétition des motifs 106 : cette fréquence FM peut être déterminée en écoutant le signal impulsionnel 100 sur une durée suffisante, par exemple sur une durée supérieure 2*DM.

Suivant un autre mode de réalisation, la présente invention propose caractériser l'émetteur impulsionnel ayant émis le signal impulsionnel 100 en utilisant, en plus de la première grandeur périodique, au moins une deuxième grandeur périodique qui peut être par exemple :

- la fréquence FP de la porteuse : cette fréquence peut être déterminée en écoutant le signal impulsionnel 100 sur une durée suffisante, par exemple sur une durée égale à la durée de l'impulsion,
- la fréquence FI, lorsque la première grandeur périodique est la fréquence FM, ou
- la fréquence FM, lorsque la première grandeur périodique est la fréquence FI.

La FIGURE 2 est une représentation schématique d'un exemple de réalisation non limitatif d'un procédé selon la présente invention.

Le procédé 200 de la FIGURE 2 peut être utilisé pour caractériser un émetteur impulsionnel qui peut être un radar, un sonar, un émetteur radiofréquence, etc.

Le procédé 200 peut en particulier être utilisé pour caractériser un émetteur impulsionnel ayant émis le signal impulsionnel 100 de la FIGURE 1.

Le procédé 200 utilise seulement une première grandeur périodique pour caractériser l'émetteur impulsionnel, ladite première grandeur périodique étant :

- la fréquence FI de répétition des impulsions 102, ou
- la fréquence FM de répétition des motifs 106.

Suivant un exemple particulier, nullement limitatif, le procédé 200 utilise la fréquence de répétition d'impulsions FI. Bien étendu, il s'agit là d'un exemple non limitatif et la fréquence FM de répétition des motifs 106 peut être utilisée à la place de la fréquence FI de répétition des impulsions 102.

Le procédé 200 comprend une étape 202 d'écoute du signal impulsionnel 100 par un récepteur, sur une première fenêtre temporelle. La première fenêtre temporelle est suffisamment grande, pour recueillir suffisamment de signal impulsionnel et calculer la valeur de la première grandeur périodique. Dans l'exemple non imitatif de la FIGURE 2, le signal impulsionnel 100 est écoutée lors de l'étape 202 jusqu'à recevoir au moins deux impulsions 102, pour déterminer une première valeur pour la fréquence FI, cette première valeur étant notée $FI_1$.

Lors d'une étape 204, la valeur $FI_1$ est calculée, par exemple en utilisant la relation suivante :

$$FI_1 = \frac{1}{\text{durée séparant deux impulsions consécutives}}$$

Cette valeur peut optionnellement être mémorisée.

Les étapes 202-204 sont réitérées pour obtenir une nouvelle valeur pour la fréquence FI, notée FIz, pour une deuxième fenêtre temporelle.

La première et la deuxième fenêtres temporelles peuvent être des fenêtres temporelles glissantes de sorte que la deuxième fenêtre temporelle commence avant la fin de la première fenêtre temporelle. Alternativement, la première et la deuxième fenêtres temporelles peuvent ne pas se chevaucher : par exemple elles peuvent être consécutives.

La première et la deuxième fenêtre temporelles peuvent avoir la même durée. Alternativement, la première et la deuxième fenêtre temporelles peuvent avoir des durées différentes.

Lors d'une étape 206, une variation de fréquence due à l'effet Doppler est calculée pour la fréquence FI de répétition des impulsions 102, par exemple en utilisant la relation suivante :

$$\Delta FI = FI_1 - FI_2$$

Lors d'une étape 208, une vitesse radiale de l'émetteur impulsionnel relativement au récepteur est calculée, à partir de la variation de la fréquence FI de répétition des impulsions 102, par exemple en utilisant la relation suivante :

$$V_r = \Delta FI . c / FI_1$$

Lorsque le récepteur est fixe, la vitesse $V_r$ calculée à l'étape 210 correspond à la vitesse radiale de l'émetteur impulsionnel.

Lorsque le récepteur est mobile dans la direction radiale, alors la vitesse radiale de l'émetteur impulsionnel peut être calculée, lors d'une étape optionnelle 210, en fonction :

- de la vitesse radiale relative obtenue à l'étape 208, et
- de la vitesse radiale de l'émetteur.

Lors d'une étape optionnelle 212, la position de l'émetteur impulsionnel peut être calculée, en fonction d'une position connue précédemment et la vitesse radiale de l'émetteur impulsionnel.

La position calculée peut être une position relative, telle que par exemple une distance entre l'émetteur impulsionnel et le récepteur.

La position calculée peut être une position géographique. Dans ce cas, le calcul de la position géographique de l'émetteur impulsionnel prend en compte, au moins la position du récepteur.

Dans l'exemple décrit en référence à la FIGURE 2, seule une grandeur périodique dans le signal impulsionnel reçu est utilisée pour caractériser l'émetteur impulsionnel. Bien entendu, il est possible d'utiliser plusieurs grandeurs périodiques contenues dans le signal impulsionnel reçu.

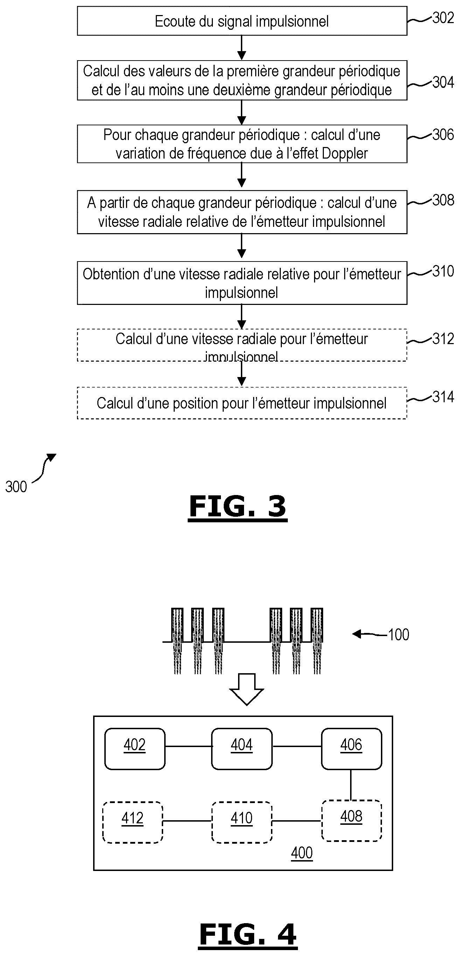

La FIGURE 3 est une représentation schématique d'un autre exemple de réalisation non limitatif d'un procédé selon la présente invention.

Le procédé 300 de la FIGURE 3 peut être utilisé pour caractériser un émetteur impulsionnel qui peut être un radar, un sonar, un émetteur radiofréquence, etc.

Le procédé 300 peut en particulier être utilisé pour caractériser un émetteur impulsionnel ayant émis le signal impulsionnel 100 de la FIGURE 1.

A l'instar du procédé 200, le procédé 300 utilise une première grandeur périodique du signal impulsionnel reçu, qui est soit la fréquence FI soit la fréquence FM, pour caractériser l'émetteur impulsionnel.

A la différence procédé 200, le procédé 300 utilise, en plus de la première grandeur périodique, au moins une autre grandeur périodique du signal impulsionnel reçu, appelé deuxième grandeur périodique, pour caractériser l'émetteur impulsionnel. Ainsi, dans le procédé 300, l'émetteur impulsionnel est caractérisé en s'appuyant sur plusieurs grandeurs périodiques du signal impulsionnel reçu, à savoir la première grandeur périodique et au moins une deuxième grandeur périodique.

Suivant un exemple particulier, nullement limitatif, la première grandeur périodique utilisée dans le procédé 300 est la fréquence de répétition des impulsions FI. De plus, la deuxième grandeur périodique utilisée dans le procédé 300 est la fréquence de répétition des motifs FM.

Bien étendu, il s'agit là d'un exemple non limitatif. Suivant une définition générale, le procédé 300 peut utiliser une combinaison :

- d'une première grandeur périodique qui peut être la fréquence FI, respectivement la fréquence FM ; et
- d'au moins une deuxième grandeur périodique qui peut être :

  ▪ la fréquence FM, respectivement la fréquence FI, ou
  ▪ la fréquence FP de la porteuse, ou encore
  ▪ toute autre grandeur périodique.

Le procédé 300 comprend une étape 302 d'écoute du signal impulsionnel 100 par un récepteur, sur une première fenêtre temporelle. La première fenêtre temporelle est suffisamment grande, pour recueillir suffisamment de signal impulsionnel et calculer les grandeurs utilisées. Comme les grandeurs périodiques utilisées sont les fréquences FI et FM, le signal impulsionnel est écoutée lors de l'étape 302, jusqu'à recevoir :

- au moins deux impulsions, pour déterminer une première valeur, notée $FI_1$, pour la fréquence FI ; et
- au moins deux motifs d'émissions pour calculer une première valeur, notée $FM_1$, pour la fréquence FM.

Lors d'une étape 304, les valeurs de fréquence $FI_1$ et $FM_1$ sont calculées, par exemple en utilisant les relations suivantes :

$$FI_1 = \frac{1}{durée\ séparant\ deux\ impulsions\ consécutives}$$

$$FM_1 = \frac{1}{durée\ séparant\ deux\ motifs\ d'émissions\ consécutives}$$

Ces valeurs peuvent optionnellement être mémorisées.

Les étapes 302-304 sont réitérées pour obtenir deux nouvelles valeurs, notées respectivement $FI_2$ et $FM_2$, pour les fréquences FI et FM pour une deuxième fenêtre temporelle.

La première et la deuxième fenêtres temporelles peuvent être des fenêtre temporelles glissantes de sorte que la deuxième fenêtre temporelle commence avant la fin de la première fenêtre temporelle. Alternativement, la première et la deuxième fenêtre temporelles peuvent ne pas se chevaucher : par exemple elles peuvent être consécutives.

La première et la deuxième fenêtres temporelles peuvent avoir la même durée. Alternativement, la première et la deuxième fenêtres temporelles peuvent avoir des durées différentes.

Lors d'une étape 306, pour chacune des grandeurs périodiques utilisées, à savoir la fréquence FI de répétition des impulsions 102 et la fréquence FM de répétition des motifs 106, une variation de fréquence due à l'effet Doppler est calculée, par exemple en utilisant les relations suivantes :

$$\Delta FI = FI_1 - FI_2$$

$$\Delta FM = FM_1 - FM_2$$

Lors d'une étape 308, une vitesse radiale de l'émetteur impulsionnel relativement au récepteur est calculée, à partir de chacune des grandeurs périodiques utilisées, à savoir la fréquence FI de répétition des impulsions 102, et la fréquence FM de répétition des motifs 106, par exemple en utilisant les relations suivantes :

$$V_r(FI) = \Delta FI.c/FI_1$$

$$V_r(FM) = \Delta FM.c/FM_1$$

Ainsi, deux vitesses radiales relatives $V_r(FI)$ et $V_r(FM)$ de l'émetteur impulsionnel sont obtenues, à partir des deux grandeurs périodiques FI et FM.

Lors d'une étape 310, une vitesse radiale relative retenue est obtenue pour l'émetteur impulsionnel, à partir de chacune des vitesses $V_r(FI)$ et $V_r(FM)$ calculées lors de l'étape 308.

Lors de cette étape 310, la vitesse radiale relative retenue pour l'émetteur impulsionnel peut être fournie par un filtre de Kalman prenant en entrée les vitesses radiales relatives obtenues lors de l'étape 308.

Alternativement, la vitesse radiale retenue pour l'émetteur impulsionnel peut être calculée suivant une relation mathématique prenant en entrée les vitesses relatives radiales $V_r(FI)$ et $V_r(FM)$ calculées à l'étape 308. Suivant un autre exemple de réalisation, la vitesse radiale retenue pour l'émetteur impulsionnel peut être calculée comme étant une moyenne des vitesses radiales $V_r(FI)$ et $V_r(FM)$ calculées à l'étape 308.

Lorsque le récepteur est fixe, la vitesse radiale relative obtenue à l'étape 310 correspond à la vitesse radiale de l'émetteur impulsionnel.

Lorsque le récepteur est mobile dans la direction radiale, alors la vitesse radiale de l'émetteur impulsionnel peut être calculée, lors d'une étape optionnelle 312, en fonction :

- de la vitesse radiale relative obtenue à l'étape 310, et

- de la vitesse radiale de l'émetteur.

Lors d'une étape optionnelle 314, la position de l'émetteur impulsionnel peut être calculée, en fonction d'une position connue précédemment et la vitesse radiale de l'émetteur impulsionnel.

La position calculée peut être une position relative, telle que par exemple une distance entre l'émetteur impulsionnel et le récepteur.

La position calculée peut être une position géographique. Dans ce cas, le calcul de la position géographique de l'émetteur impulsionnel prend en compte, au moins la position du récepteur.

Dans l'exemple décrit en référence à la FIGURE 2, seules deux grandeurs périodiques sont utilisées. Bien entendu, il est possible d'utiliser plus que deux grandeurs périodiques.

Le FIGURE 4 est une représentation schématique d'un exemple de réalisation non limitatif d'un dispositif selon la présente invention.

Le dispositif 400 de la FIGURE 4 peut être utilisé pour mettre en oeuvre un procédé selon l'invention, et en particulier l'un quelconque des procédés 100 ou 200.

Le dispositif 400 comprend au moins un module 402 configuré pour calculer une valeur, pour une ou plusieurs grandeurs périodiques d'un signal impulsionnel, pour au moins deux fenêtres temporelles d'écoute dudit signal impulsionnel. En particulier, ce module 402 peut être configuré pour mettre en oeuvre l'étape 204, ou l'étape 304, décrites plus haut.

Le dispositif 400 comprend en outre un module 404 de calcul, pour une ou chaque grandeur périodique, d'une valeur de variation de fréquence due à l'effet Doppler, à partir des valeurs fournies par le module 402. Ce module 404 peut en particulier être configuré pour mettre en oeuvre l'étape 206, ou l'étape 306, décrites plus haut.

Le dispositif 400 comprend en outre un module 406 de calcul d'une vitesse radiale relative de l'émetteur du signal impulsionnel, à partir d'une variation de fréquence calculée par le module 404. Ce module 406 peut en particulier être configuré pour mettre en oeuvre l'étape 208, ou l'étape 308, décrites plus haut.

Le dispositif 400 comprend en outre un module optionnel 408 de calcul d'une vitesse radiale relative de l'émetteur du signal impulsionnel, à partir de plusieurs vitesses calculées par le module 406, chacune avec une grandeur périodique du signal impulsionnel reçu. Ce module optionnel 408 peut par exemple, et de manière nullement limitative, être un filtre de Kalman. Ce module optionnel 408 peut en particulier être configuré pour mettre en oeuvre l'étape 310 décrite plus haut.

Le dispositif 400 peut en outre comprendre un module optionnel 410 de calcul d'une vitesse radiale de l'émetteur du signal impulsionnel, à partir de la vitesse radiale relative calculée par le module 408, ou le module 406, et d'une vitesse radiale du récepteur. Ce module optionnel 410 peut en particulier être configuré pour mettre en oeuvre l'étape optionnelle 210, ou l'étape optionnelle 312, décrites plus haut.

Le dispositif 400 peut en outre comprendre un module optionnel 412 de calcul d'une position, position relative ou position géographique, de l'émetteur du signal impulsionnel. Ce module optionnel 412 peut en particulier être configuré pour mettre en oeuvre l'étape optionnelle 212, ou l'étape optionnelle 314, décrites plus haut.

Au moins un des modules 402-412 peut être un module matériel, tel qu'un processeur, une puce électronique, un calculateur, un ordinateur, un serveur, etc.

Au moins un des modules 402-412 peut être un module logiciel, tel qu'une application, un programme d'ordinateur, une machine virtuelle, etc.

Au moins un des modules 402-412 peut être un module individuel et indépendant des autres modules 402-412.

Au moins deux des modules 402-412 peuvent être intégrés au sein d'un même module.

Le dispositif 400 peut se présenter sous une forme matérielle, tel qu'un ordinateur, un serveur, un processeur, une puce électronique, etc.

Le dispositif 400 peut se présenter sous une forme logicielle tel qu'un programme d'ordinateur, ou une application, par exemple une application pour un appareil utilisateur de type tablette ou Smartphone.

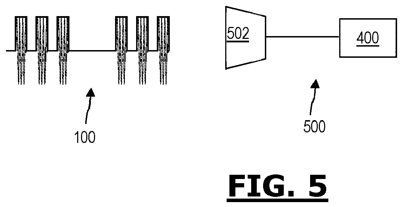

La FIGURE 5 est une représentation schématique d'un exemple de réalisation non limitatif d'un récepteur selon la présente invention.

Le récepteur 500 comprend une antenne 502, pour écouter et recevoir un signal impulsionnel émis par un émetteur impulsionnel.

Le récepteur 500 de la FIGURE 5 comprend en outre un dispositif selon l'invention, et en particulier le dispositif 400 de la FIGURE 4, pour traiter le signal impulsionnel reçu par l'antenne 502 et caractériser l'émetteur impulsionnel ayant émis ledit signal impulsionnel reçu, et en particulier pour déterminer sa vitesse radiale relative, et optionnellement sa vitesse radiale et/ou sa position.

Alternativement, à ce qui est représenté sur la FIGURE 5, le récepteur 500 peut comprendre plusieurs antennes, ou un réseau antennaire comprenant plusieurs antennes. Dans ce cas, au moins une, en particulier chaque, antenne peut être configurée pour écouter une zone d'écoute différente d'une zone d'écoute associée à au moins une autre antenne. Alternativement, au moins deux, en particulier toutes les, antennes peuvent être configurées pour écouter une même zone d'écoute.

Bien entendu l'invention n'est pas limitée aux exemples qui viennent d'être décrits.

**Revendications**

1. Procédé (200;300) de caractérisation d'un émetteur de signal impulsionnel, ledit procédé (200) comprenant les étapes suivantes :

- réception (202;302), par un récepteur (400), du signal impulsionnel (100) émis par ledit émetteur,
- calcul (206;306) d'une variation de fréquence due à l'effet Doppler pour une première grandeur périodique dans ledit signal impulsionnel reçu, et
- détermination (208;308,310) de la vitesse radiale relative dudit émetteur par rapport audit récepteur (500), en fonction de ladite variation de fréquence de ladite première grandeur périodique ;

**caractérisé en ce que** ladite première grandeur périodique est choisie parmi les grandeurs suivantes :

- une fréquence de répétition d'impulsions (102), ou
- une fréquence de répétition de motifs d'émission (106), chaque motif d'émission (106) comprenant un nombre fixe de plusieurs impulsions (102)

2. Procédé (200) selon la revendication 1, **caractérisé en ce que** la caractérisation de l'émetteur par rapport audit récepteur (500) est réalisée uniquement en fonction de la variation de la fréquence de la première grandeur périodique.

3. Procédé (300) selon la revendication 1, **caractérisé en ce que** :

- l'étape (306) de calcul réalise un calcul d'une variation de fréquence due à l'effet Doppler, pour au moins une deuxième grandeur périodique dans le signal impulsionnel, et
- la vitesse radiale relative de l'émetteur par rapport audit récepteur (500) est déterminée en fonction :

  ▪ de la variation de fréquence de ladite première grandeur périodique, et
  ▪ de la variation de fréquence de ladite au moins une deuxième grandeur périodique.

4. Procédé (300) selon la revendication précédente, **caractérisé en ce que** au moins une deuxième grandeur périodique est choisie parmi les grandeurs suivantes :

- la fréquence de répétition d'impulsions (102), lorsque la première grandeur périodique est la fréquence de répétition de motifs d'émission (106),
- la fréquence de répétition de motifs d'émission (106) lorsque la première grandeur est la fréquence de répétition d'impulsions (102),
- une fréquence d'une porteuse utilisée pour générer chaque impulsion (102).

5. Procédé (300) selon l'une quelconque des revendications 3 ou 4, **caractérisé en ce que** l'étape (308,310) de détermination de la vitesse radiale relative de l'émetteur comprend les étapes suivantes :

- calcul (308) d'une vitesse radiale relative, dite individuelle, en fonction de la variation de fréquence de chacune des première et deuxième(s) grandeurs périodiques ; et
- fourniture (310) de la vitesse radiale de l'émetteur en fonction desdites vitesses radiales relatives individuelles.

6. Procédé (300) selon la revendication précédente, **caractérisé en ce que** la vitesse radiale relative de l'émetteur est fournie par un filtre de Kalman prenant en entrée les vitesse radiales relatives individuelles.

7. Procédé (200;300) selon l'une quelconque des revendications précédentes, **caractérisé en ce qu'**il comprend en outre une étape (212;314) de détermination d'une position de l'émetteur impulsionnel en fonction de la vitesse radiale relative dudit émetteur impulsionnel.

8. Procédé (200;300) selon l'une quelconque des revendications précédentes, **caractérisé en ce que** le signal impulsionnel (100) est :

- un signal radar émis par un radar,
- un signal sonar émis par un sonar,
- un signal radiofréquence émis par un émetteur radiofréquence.

**9.** Programme d'ordinateur comprenant des instructions exécutables qui, lorsqu'elles sont exécutées par un appareil informatique, mettent en en oeuvre toutes les étapes du procédé (200;300) selon l'une quelconque des revendications précédentes.

**10.** Dispositif (400) de caractérisation d'un émetteur de signal impulsionnel, comprenant des moyens (402-412) configurés pour mettre en oeuvre le procédé (200;300) selon l'une quelconque des revendications 1 à 8.

**11.** Récepteur (500) de signaux impulsionnels comprenant :

- au moins une antenne de réception (502), pour recevoir le signal impulsionnel (100) émis par un émetteur impulsionnel ; et
- un dispositif (400) selon la revendication précédente.

106

1/$F_I$

$D_I$

102

106

100

104

$D_M$

1/$F_M$

## FIG. 1

| | |
|---|---|
| Ecoute du signal impulsionnel | 202 |
| Calcul de valeur de la fréquence de répétition des impulsions FI, ou de la fréquence de répétition des motifs FM | 204 |
| Calcul d'une variation de fréquence due à l'effet Doppler | 206 |
| Calcul d'une vitesse radiale relative de l'émetteur impulsionnel | 208 |
| Calcul d'une vitesse radiale pour l'émetteur impulsionnel | 210 |
| Calcul d'une position pour l'émetteur impulsionnel | 212 |

200

## FIG. 2

Ecoute du signal impulsionnel ⟩~302

Calcul des valeurs de la première grandeur périodique et de l'au moins une deuxième grandeur périodique ⟩~304

Pour chaque grandeur périodique : calcul d'une variation de fréquence due à l'effet Doppler ⟩~306

A partir de chaque grandeur périodique : calcul d'une vitesse radiale relative de l'émetteur impulsionnel ⟩~308

Obtention d'une vitesse radiale relative pour l'émetteur impulsionnel ⟩~310

Calcul d'une vitesse radiale pour l'émetteur impulsionnel ⟩~312

Calcul d'une position pour l'émetteur impulsionnel ⟩~314

300

## FIG. 3

←—100

402  404  406

412  410  408

400

## FIG. 4

100

502    400

500

# FIG. 5

Europäisches
Patentamt

European
Patent Office

Office européen
des brevets

# RAPPORT DE RECHERCHE EUROPEENNE

**Numéro de la demande**

**EP 23 30 5815**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 610 609 A (ROSE CONRAD M [US]) 11 mars 1997 (1997-03-11) * abrégé * * colonne 1, ligne 7 – ligne 10 * * colonne 2, ligne 5 – ligne 6 * * colonne 2, ligne 27 – ligne 33 * * colonne 2, ligne 59 – ligne 63 * * revendication 1 * ----- | 1–11 | INV. G01S7/02 G01S11/10 G01S11/14 |
| A | US 2019/164442 A1 (JUST TIMOTHY [US]) 30 mai 2019 (2019-05-30) * abrégé * * alinéa [0063] * ----- | 1–11 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 19 octobre 2023 | Alberga, Vito |

## ANNEXE AU RAPPORT DE RECHERCHE EUROPEENNE
## RELATIF A LA DEMANDE DE BREVET EUROPEEN NO.

**EP 23 30 5815**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**19-10-2023**

| Document brevet cité au rapport de recherche | | Date de publication | Membre(s) de la famille de brevet(s) | | Date de publication |
|---|---|---|---|---|---|
| US 5610609 | A | 11-03-1997 | AUCUN | | |
| US 2019164442 | A1 | 30-05-2019 | US | 2019164442 A1 | 30-05-2019 |
| | | | US | 2020265728 A1 | 20-08-2020 |
| | | | US | 2021383707 A1 | 09-12-2021 |
| | | | US | 2023196926 A1 | 22-06-2023 |

EPO FORM P0460

Pour tout renseignement concernant cette annexe : voir Journal Officiel de l'Office européen des brevets, No.12/82